Europäisches Patentamt

European Patent Office

Office européen des brevets

(19)

(11) Publication number: **0 327 240**
**A1**

## EUROPEAN PATENT APPLICATION

(21) Application number: **89300642.9**

(22) Date of filing: **24.01.89**

(51) Int. Cl.⁴: **C03B 9/40 , C03B 11/16**

(30) Priority: **05.02.88 US 152687**

(43) Date of publication of application:
**09.08.89 Bulletin 89/32**

(84) Designated Contracting States:
**DE FR GB IT**

(71) Applicant: **EMHART INDUSTRIES, INC.**
**426 Colt Highway**
**Farmington Connecticut 06032(US)**

(72) Inventor: **Pinkerton, Steven James**
**55 Revere Drive**
**Ridgefield Connecticut 06877(US)**

(74) Representative: **Randall, John Walter et al**
**Emhart Patents Department Lyn House 39**
**The Parade**
**Oadby, Leicester LE2 5BB(GB)**

(54) Individual section glass forming machine.

(57) The displacement of one or more of the plungers in an individual section glass forming machine is monitored so that the location of the plungers, when each mould cavity has completely filled (parison formation point), can be determined. When a plunger is located at the parison formation point the feed pressure is reduced by a selectable amount.

EP 0 327 240 A1

# INDIVIDUAL SECTION GLASS FORMING MACHINE

The present invention relates to the simultaneous forming of gobs of molten glass into parisons in an individual section glass forming machine.

In a glassware forming machine of the individual section type, a number of container making sections arranged side by side are fed with glass from a common source and feed their output to a common conveyor. In a multi-gob section, two or more parison moulds are provided in each of which a parison is formed from a gob of molten glass delivered to the mould, and a corresponding number of blow moulds in which the parisons are blown to the final shape of the container. In general a parison mould assembly comprises two side mould halves which are movable between a closed position where they engage one another and other parts of the mould assembly to form a mould cavity, and an open position where they are spaced from one another to permit removal of a formed parison. Each mould assembly also comprises a plunger mechanism comprising a plunger which, when a gob of molten glass is positioned in the mould cavity, is advanced to press the glass against the walls of the cavity to form the parison.

It will be understood that, particularly in a multi-cavity machine, pressing the glass to form the parisons develops considerable pressure on the side mould halves tending to force them apart. Should any such movement of the side mould halves occur, a seam may be produced on the parisons being formed, and such seams are likely to reduce the uniformity of the finally produced containers either by being visible on the containers or by being the cause of other faults on the containers. It will be understood that the greater the number of mould cavities, the greater will be any tendency for such movement of the mould halves to occur.

It is an object of the present invention to increase the uniformity of containers produced by individual section glass forming machines.

The present invention provides an individual section glass forming machine comprising at least one parison mould assembly including a plunger displaceable from a retracted position to a fully inserted position, means (Plunger Controller, Control Valve) for displacing said plunger from said retracted to said fully inserted position, said plunger advancing to a parison formation point where the mould cavity has become completely full and then to the fully inserted position as the formed parison cools, said displacing means including means (Pressure Setting Mechanism) for applying a selected pressure to said plunger as said plunger approaches said parison formation point, means for sensing the actual position of said plunger throughout at least the last portion of its displacement which includes the parison formation point, computer means (Parison Formation Point Determiner) for determining when the displacement curve for said plunger, during said portion of its displacement becomes linear to locate the actual parison formation point for said plunger, and means (Parison Formation Point Determiner) for decreasing said selected pressure by a predetermined amount when said computer means determines that said plunger has been displaced to said parison formation point.

Referring to the drawings:

Figure 1 is a diagrammatic view of a parison mould assembly of an individual section glass forming machine; and

Figure 2 is a graph illustrating a final portion of the movement of a mould assembly plunger in forming a parison.

A glassware forming machine of the individual section, multi-gob type, has a number of individual sections each having a selected number (usually 2, 3 or 4) of parison mould assemblies 10 for simultaneously forming a corresponding number of parisons. Each of these mould assemblies 10 includes two mould halves 11 which are movable between a closed position where they engage one another and other parts of the mould assembly to form a mould cavity 12 and an open position where the mould halves 11 are spaced to permit removal of a formed parison. A neck ring 14 cooperates with the mould halves 11 to define the cavity 12 and is arranged to grip the neck portion of a formed parison so that the parison can be transferred from the mould cavity to a blow mould. A baffle 16, movable into a position on top of the engaging mould halves 11, defines the upper surface of the mould cavity and is moved to a remote location prior to parison removal.

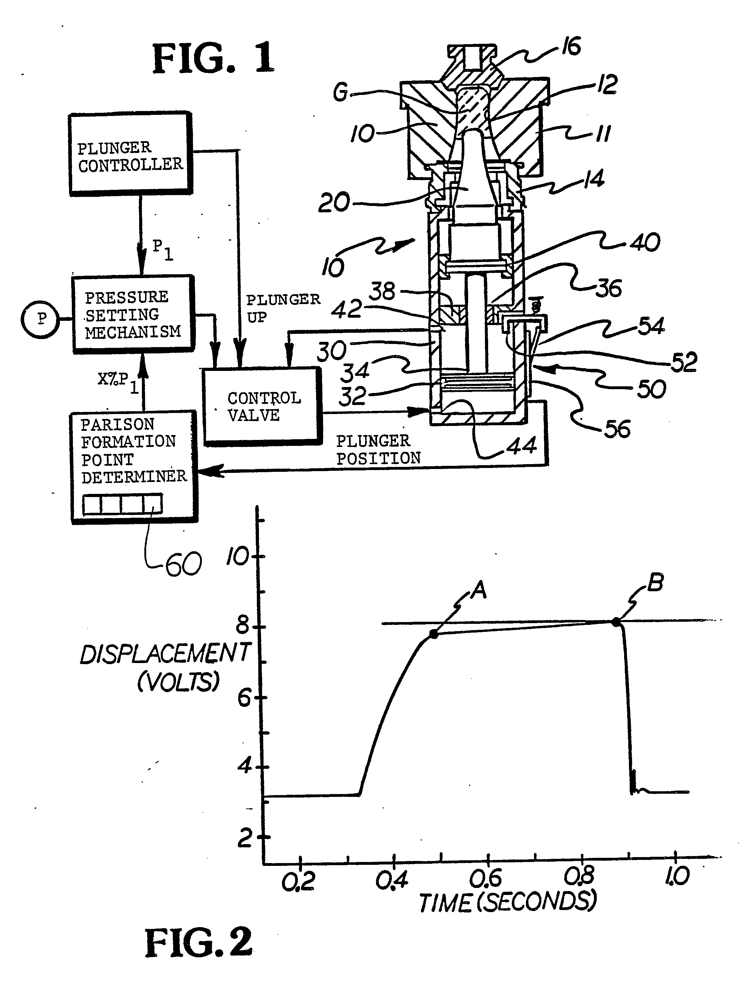

Each mould assembly also has a plunger mechanism including a plunger 20. The plunger 20 is first moved from its out-of-the-way position to its intermediate position where the plunger projects upwardly into the mould cavity. A gob of molten glass is dropped into the mould cavity 12 and rests on the plunger 20. The plunger is then advanced under a constant feed pressure from this intermediate position to press the glass against the walls of the cavity 12 to form the parison. In Figure 1 the plunger is shown during its advancement from the intermediate position to its fully advanced position. The plunger is then retracted to its intermediate position by cutting the feed pressure and applying a retract pressure and then retracted from the intermediate position to the out-of-the-way position to allow for removal of the parison.

The plunger mechanism also has a cylinder 30, a piston 32 movable in the cylinder 30, and a piston rod 34 projecting from the piston 32 through a seal 36 in an upper end cap 38 of the cylinder 30. The plunger 20 is mounted on an upper end portion of the piston rod 34 by a clamping ring 40. Pressurized hydraulic fluid introduced into the cylinder 30 through an upper entry port 42 causes the piston 32 to move downwards in the cylinder 30, and the introduction of the fluid through port 44 causes the piston 32 to move upwardly in the cylinder 30.

Each parison mould assembly also has a Control Valve which can alternately apply pressure to the appropriate cylinder ports 42, 44. The condition of the Control Valve (whether pressure is to be inputted via port 42 (plunger down) or port 44 (plunger up)) is controlled by a Plunger Controller (the system is illustrated with the Control Valve in the plunger up condition). The Control Valve is connected to pump P via a Pressure Setting Mechanism (a restrictor operated by a servo mechanism, for example), and the system is illustrated as the plunger is being advanced from the intermediate to the operative position with the Plunger Controller defining the desired feed pressure P1 for the Pressure Setting Mechanism.

It is within the last 3/8" of plunger stroke that the mould cavity becomes completely filled in the parison forming process. To track the displacement of each plunger throughout this portion of the stroke, each Parison Mould Assembly includes a displacement probe assembly having a linear potentiometer 50 secured to the cylinder 30. As a plunger is displaced through this 3/8", the piston 32 of that plunger will engage and displace a probe 52 to which is secured a potentiometer wiper 54. The displacement of this wiper 54 along an element 56 of the potentiometer changes the output of the linear potentiometer.

Figure 3 illustrates a plot of plunger displacement (voltage), as sensed by the probe, versus time, zero seconds being when the Plunger Controller commences plunger displacement (fires "plunger-up" solenoid, for example). This plot reveals a linear or constant velocity region between points A and B. Since the pressure is constant during this plunger advancement, the force exerted on the glass by the plunger remains constant. It is believed that point A is the point where the mould cavity has completely filled (the parison formation point) and that from point A to point B, the glass is cooling, and hence, shrinking. Point B corresponds to the time when the Plunger Controller commences plunger retraction (fires "plunger-down" solenoid, for example).

The Parison Formation Point Determiner for each plunger, which receives positional data from its associated displacement probe assembly determines when Point A has been reached (has determined that the displacement curve has become linear), and defines a new pressure setting (X%P1) to the Pressure Setting Mechanism. This drops the pressure applied by the plunger, thereby preventing the undesired opening of the moulds prior to Point B. A thumb wheel switch or the like 60 may be used to input the value of "X" which could be 70, for example.

## Claims

1. An individual section glass forming machine comprising
at least one parison mould assembly (10) including a plunger (20) displaceable from a retracted position to a fully inserted position,
means (Plunger Controller, Control Valve) for displacing said plunger from said retracted to said fully inserted position, said plunger advancing to a parison formation point where the mould cavity has become completely full and then to the fully inserted position as the formed parison cools,
said displacing means including means (Pressure Setting Mechanism) for applying a selected pressure to said plunger as said plunger approaches said parison formation point,
means (50) for sensing the actual position of said plunger (20) throughout at least the last portion of its displacement which includes the parison formation point,
computer means (Parison Formation Point Determiner) for determining when the displacement curve for said plunger, during said portion of its displacement becomes linear to locate the actual parison formation point for said plunger, and
means (Parison Formation Point Determiner) for decreasing said selected pressure by a predetermined amount when said computer means determines that said plunger has been displaced to said parison formation point.

2. An individual section glass forming machine according to claim 1 comprising a plurality of parison mould assemblies (10).

3. An individual section glass forming machine according to claim 1, wherein said determining means includes means (60) for inputting said predetermined amount.

4. An individual section glass forming machine according to claim 3, wherein said sensing means comprises a linear potentiometer (50).

# FIG. 1

PLUNGER CONTROLLER

$P_1$

PRESSURE SETTING MECHANISM

P

PLUNGER UP

$X\%P_1$

PARISON FORMATION POINT DETERMINER

60

CONTROL VALVE

PLUNGER POSITION

G
16
12
10
11
20
14
10
40
36
38
42
54
30
52
34
50
32
56
44

DISPLACEMENT (VOLTS)

10

8

6

4

2

A

B

0.2    0.4    0.6    0.8    1.0

TIME (SECONDS)

# FIG. 2

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | US - A - 4 662 923 (VAJDA et al.)<br>* Column 1, lines 13-19; column 5, line 59 - column 8, line 20; column 3, lines 5-12; fig. * | 1-4 | C 03 B 9/40<br>C 03 B 11/16 |
| X | US - A - 4 613 352 (KRUMME et al.)<br>* Claims 1,7-11; fig. * | 1-3 | |
| X | DE - A1 - 3 248 266 (VEBA-GLAS AG)<br>* Claims; page 8, lines 4-17; fig. * | 1-3 | |

TECHNICAL FIELDS
SEARCHED (Int. Cl.4)

C 03 B

The present search report has been drawn up for all claims

| Place of search | Date of completion of the search | Examiner |
|---|---|---|
| VIENNA | 18-04-1989 | HAUSWIRTH |